# EUROPEAN PATENT SPECIFICATION

(11) **EP 4 253 154 B1**
(45) Date of publication and mention of the grant of the patent: **24.09.2025**
(21) Application number: 22165328.0
(22) Date of filing: 30.03.2022
(51) Int. Cl.: B60R 13/00, H04N 5/00, H04N 7/00

(54) **CAMERA SYSTEM FOR VEHICLE**
KAMERASYSTEM FÜR EIN FAHRZEUG
SYSTÈME DE CAMÉRA POUR VÉHICULE

(43) Date of publication of application: 04.10.2023
(73) Proprietor: Motherson Innovations Company Limited, London EC2N 2AX (GB)
(72) Inventor: Tischler, Raphael, 77955 Ettenheim (DE)
(74) Representative: Westphal, Mussgnug & Partner Patentanwälte mbB

(56) References cited:
- US-A1- 2013 321 686

## Description

The present invention relates to opto-electronic apparatus related to external parts of motor Vehicles. More particularly, the present invention relates to Vehicle logo illumination and camera system for motor Vehicles.

The statements in this section merely provide background information related to the present disclosure and may not constitute prior art.

Generally, the motor Vehicles have a logo embedded, embossed or illuminated around the external part of the Vehicle. The logo is affixed to show the manufacture details of the car. More often, the logo of the manufacturer is required for various purpose including homologation requirement to identify the Vehicle and legal requirement associated with the Vehicle. The logo of the Vehicle manufacturer is embedded, embossed or illuminated such that the logo is visible to the outside world to satisfy various requirement including the homologation.

Further, the modern Vehicles are equipped with a camera system to see front, rear and/or around the Vehicle. Therefore, to equip such camera system, the more sensible location to integrate such cameras often overlaps with the space or location of the logo portion, be it the front or the rear end of the Vehicle. Particularly, the logo of the Vehicle is integrated into the bumpers i.e. either the front bumper or the rear bumper. The camera system is also integrated into the bumpers of the Vehicle which raises the problem of effective management of the space and location to mount each.

More particularly, the camera system or the illuminated logo system requires individual casing or housing space to work independently which also raises the problem of space management since the location and space of both the camera system and the logo system overlap with each other.

US 2013/321686 A1 discloses a camera system.

In view of the aforementioned drawbacks inherent in the existing state of the art, it is desirous to have an effective solution to mount both the camera system and the logo system.

A camera system for a vehicle with the features of claim 1 is suggested, the camera system comprising a camera module configured to capture a field-of-view (FOV) of the camera module in a scenery at least around the vehicle, an illumination system configured to project at least one of a static image and a dynamic image, a housing unit configured to accommodate the camera module and the illumination system, wherein the housing unit is configured with an orifice, and a Switchable foil is configured to cover the orifice, wherein the Switchable foil is configured to be switched between an opaque state and a transparent state, a control unit configured to electronically switch the Switchable foil into the opaque state in an event the camera module is disabled and the illumination system is enabled to project at least one of the static image and the dynamic image, and electronically switch the Switchable foil into the transparent in state in an event the illumination system is disabled and the camera module is enabled to capture the field-of-view in a scenery at least around the Vehicle.

In an embodiment, the camera module is mounted within the housing unit such that the camera module is capable of capturing the field-of-view of the camera module in a scenery at least around the Vehicle through the orifice of the housing unit.

In a further embodiment, the illumination system is mounted within the housing unit such that the illumination system is configured to project at least one of the static image and the dynamic image towards the orifice of the housing unit.

In a further embodiment, the camera module captures the field-of-view in a scenery at least around the Vehicle and the Switchable foil turns transparent in an event the illumination system is disabled and the camera module is enabled to capture the field-of-view in a scenery at least around the Vehicle.

In a further embodiment, the camera module and the illumination system are disposed within the housing unit such that the line-of-sights (LoSs) of the camera module and the illumination system are not in interference with each other.

In a further embodiment, the housing unit is closed at all sides except from the orifice through which any light is allowed to enter or exit.

In a further embodiment, the housing is made of one of plastic, metal and alloy.

According to the invention, the switchable foil captures the light and displays the static image or the dynamic image on it, in an event the control unit switches the switchable foil to the opaque state.

In a further embodiment, the control unit further is configured to one of enable and disable one of the camera module and the illumination system.

A method of operating a camera system for a vehicle with the features of claim 9 is suggested, comprising: capturing a field-of-view by a camera module in a scenery at least around the vehicle, projecting at least one of a static image and a dynamic image by an illumination system, wherein a housing unit is configured to accommodate the camera module and the illumination system, the housing unit is configured with an orifice, and a switchable foil is configured to cover the orifice, the switchable foil is configured to be switched between an opaque state and a transparent state, electronically switching the switchable foil, by a control unit, into the opaque state in an event the camera module is disabled and the illumination system is enabled to project at least one of the static image and the dynamic image, and electronically switching the switchable foil, by the control unit, into the transparent state in an event the illumination system is disabled and the camera module is enabled to capture the field-of-view in a scenery at least around the vehicle.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which taken in conjunction with the annexed drawings, discloses exemplary embodiments of the invention.

The invention itself, together with further features and attended advantages, will become apparent from consideration of the following detailed description, taken in conjunction with the accompanying drawings. One or more embodiments of the present invention are now described, by way of example only wherein like reference numerals represent like elements and in which:
Figure 1a and Figure 1b illustrate each a Vehicle and its bumper configured with a camera system, in accordance with an exemplary embodiment of the present invention;
Figures 2a-2f illustrate each a different perspective view of the camera system, in accordance with an exemplary embodiment of the present invention; and
Figure 3 illustrates a method flow chart for operating the camera system, in accordance with an exemplary embodiment of the present invention.

The drawings referred to in this description are not to be understood as being drawn to scale except if specifically noted, and such drawings are only exemplary in nature.

The term "comprises", "comprising", "including", "having", "consist of" or any other variations indicate non-exclusive inclusion in order to cover a setup, structure or method that comprises a list of components or steps does not include only those components or steps but may include other components or steps not expressly listed or inherent to such setup or structure or method. Meaning thereby, one or more elements in an apparatus proceeded by "comprises... a" does not, without more constraints, preclude the existence of other elements or additional elements in the system or apparatus.

For increasing the intelligibility of this invention, references are made to the embodiment illustrated in the accompanying Figures and description herein below, further, in the following Figures, the same reference numerals are used to identify the same components in alternative views.

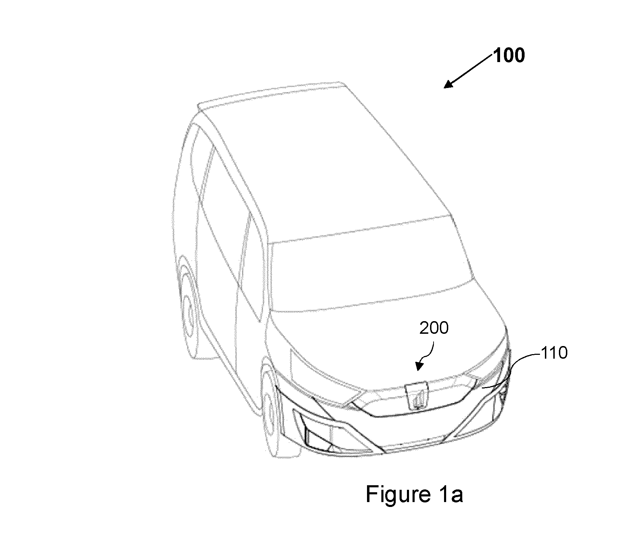

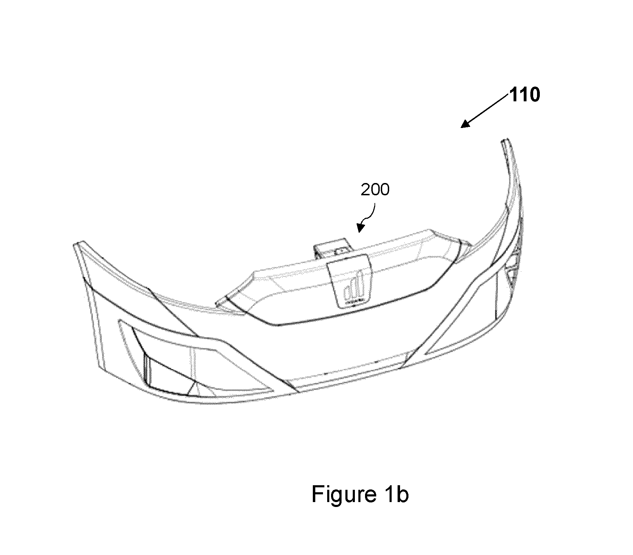

As illustrated in Figures 1a and 1b, described herein is a camera system 200 integrated into one or more bumper 110 of a Vehicle 100. The camera system 200 is an integrated solution to provide better space utilization and operational capacity to a camera module 210 and an illumination system 220 of the Vehicle 100.

The Vehicle 100 comprises a camera system 200 mounted into the bumper 110 of the Vehicle 100. The vehicle bumpers 110 are usually used to display the logo of the manufacturer of the Vehicle 100. Further, the bumpers 110 are strategically used to capture rear, front and/or 360-degree view around the Vehicle 100.

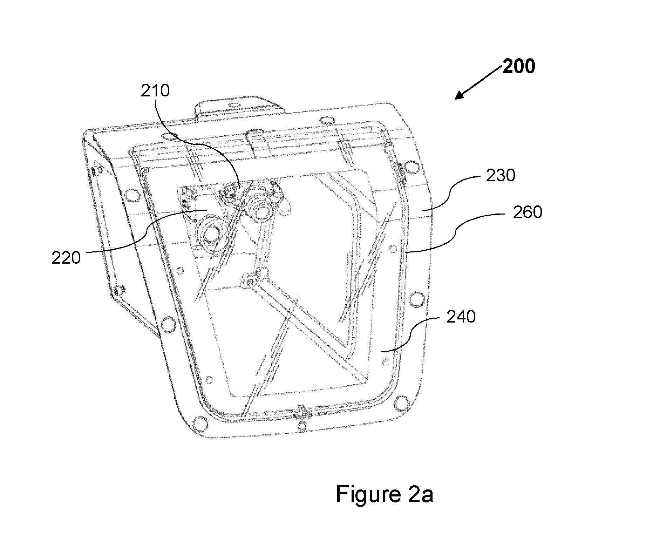

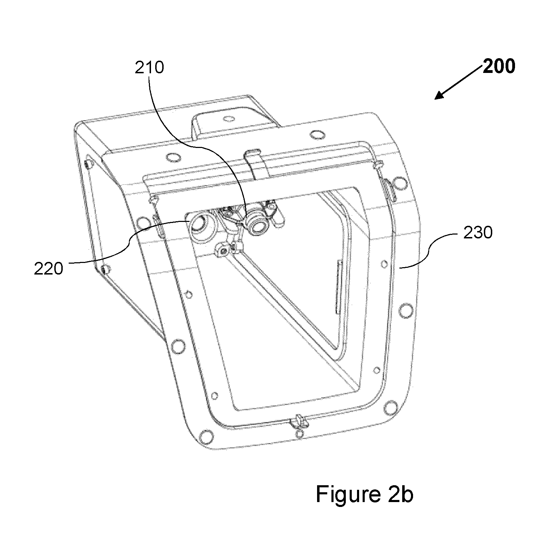

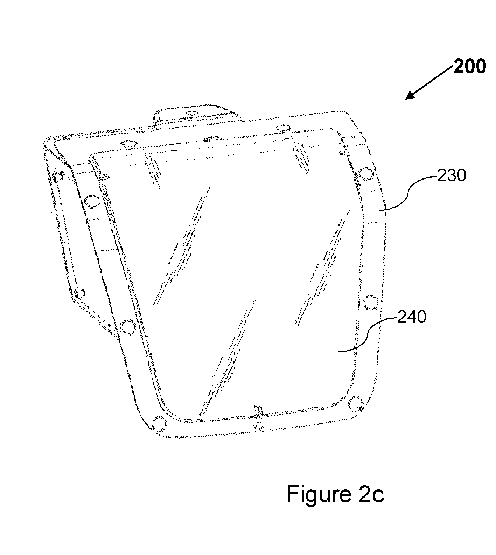

As illustrated in Figures 2a-2f, described herein are the structural units of the camera system 200. The camera system 200 essentially comprises a camera module 210, an illumination system 220, a housing unit 230, a Switchable foil 240 and a control unit (not shown in Figures).

The camera module 210, as used hereinabove, is configured to capture a field-of-view (FOV) of the camera module 210 in a scenery at least around the Vehicle 100. The camera may be a high-resolution camera configured to take night and day images as may be required for viewing rear end, front end or 360-degree view of the Vehicle 100.

The illumination system 220, as used hereinabove, is configured to project at least one of a static image and a dynamic image. The illumination system 220 comprises one or more logo lamps configured to project static or dynamic images to a screen. The static or dynamic image may include but is not limited to a manufacturer logo, an advertisement image or an advertisement video.

The housing unit 230, as used hereinabove, is configured to accommodate the camera module 210 and the illumination system 220, wherein the housing unit 230 is configured with an orifice 260. The housing unit 230 may be a single part or a multi part moulded or casted hosing configured to accommodate one or more components of the camera system 200. The materials used to manufacture the housing unit 230 may include but are not limited to polymer, metal, alloy or any combination thereof.

The Switchable foil 240, as used hereinabove, is configured to cover the orifice 260, wherein the Switchable foil 240 is configured to be switched between an opaque state and a transparent state. The Switchable foil 240 may also be known as a smart glass or a switchable glass. The Switchable foil 240 is preferably made by sandwiching a smart film or a switchable film in-between a couple of glasses. The light transmission properties of the Switchable foil 240 are altered when voltage, light, or heat is applied.

In general, the Switchable foil 240 changes from a transparent to a translucent state and vice versa, changing from letting light pass through to blocking some or all wavelengths of light and vice versa. The two states of the Switchable foil 240 are an opaque state and a transparent state. In the opaque state, all the light rays are blocked and in the transparent state all the light rays or most of them are allowed to pass through. Usually, the Switchable foil 240 is changed or is switched from the opaque state to the transparent state and vice-versa by applying a voltage. The voltage is applied in a controlled manner and as and when required by the control unit.

The control unit, as used hereinabove, is configured to electronically switch the Switchable foil 240 from the transparent state to the opaque state in an event the camera module 210 is disabled and the illumination system 220 is enabled to project at least one of the static image and the dynamic image. Further, the control unit is configured to electronically switch the Switchable foil 240 from the opaque state into the transparent state in an event the illumination system 220 is disabled and the camera module 210 is enabled to capture the field-of-view in a scenery at least around the Vehicle 100.

The control unit or the electronic control unit (ECU), also known as an electronic control module (ECM), is an embedded system in automotive electronics that controls one or more of the electrical systems or subsystems in a Vehicle 100. The development of a control unit involves both hardware and software required to perform the functions expected from a particular module and it is the camera module 210 and the Switchable foil 240 in the current example of the disclosure. The hardware may include but is not limited to a general purpose or a special purpose microcontroller or microprocessor.

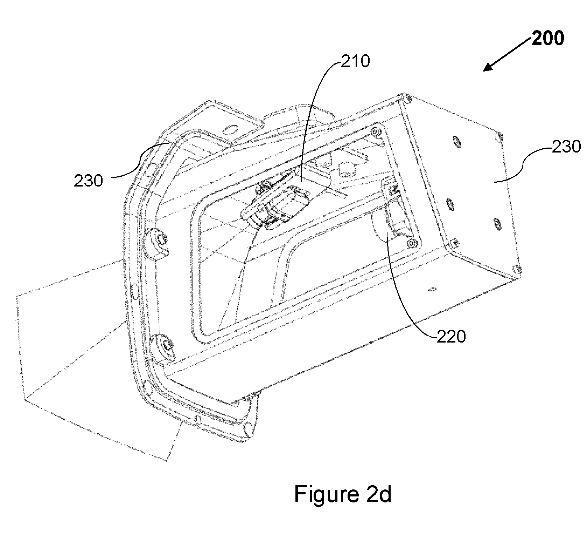

Furthermore, as shown in Figure 2d, the camera module 210 is mounted within the housing unit 230 such that the camera module 210 is capable of capturing the field-of-view of the camera module 210 in a scenery at least around the Vehicle 100 though the orifice of the housing unit 230.

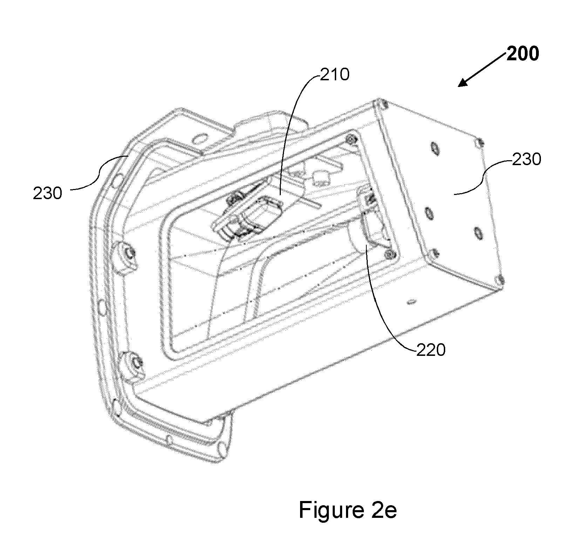

As illustrated in Figure 2e, the illumination system 220 is mounted within the housing unit 230 such that the illumination system 220 is configured to project at least one of the static image and the dynamic image towards the orifice 260 of the housing unit 230.

The Switchable foil 240 turns transparent, in a controlled manner by the control unit, in an event the illumination system 220 is disabled and the camera module 210 is enabled to capture the field-of-view in a scenery at least around the Vehicle 100.

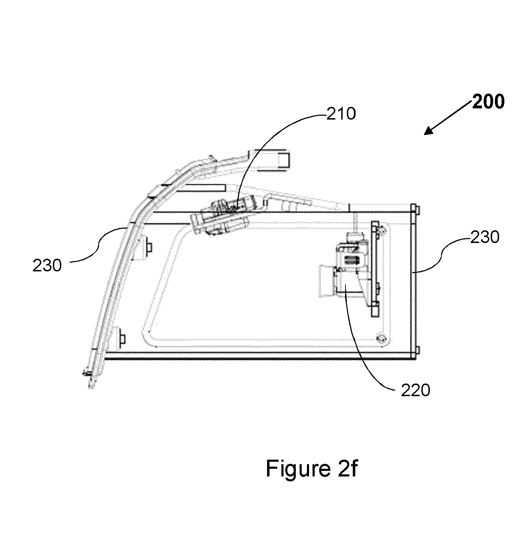

As illustrated in Figure 2f, the camera module 210 and the illumination system 220 are disposed within the housing unit 230 such that the line-of-sights (LoSs) of the camera module 210 and the illumination system 220 are not in interference with each other. Further, the housing unit 230 is closed at all sides except from the orifice 260 through which any light is allowed to enter or exit.

The Switchable foil 240 captures the light and displays the static image or the dynamic image on it, in an event the control unit switches the Switchable foil 240 to the opaque state. The control unit further is configured to one of enable and disable one of the camera module 210 and the illumination system 220.

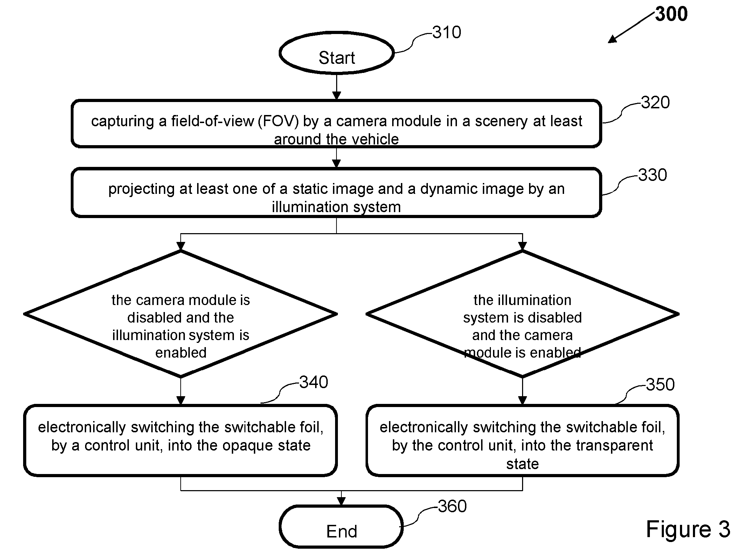

As illustrated in Figure 3, disclosed herein is a method flow chart for operating a camera system 200 for a Vehicle 100. The method 300 initiates at step 310.

At step 320, a field-of-view (FOV) is captured by the camera module 210 in a scenery at least around the Vehicle 100.

At step 330, at least one of a static image and a dynamic image is projected by the illumination system 220. The housing unit 230 is configured to accommodate the camera module 210 and the illumination system 220, the housing unit 230 is configured with an orifice 260. Further, the Switchable foil 240 is configured to cover the orifice 260, and the Switchable foil 240 is configured to be switched between an opaque state and a transparent state.

At step 340, the Switchable foil 240 is electronically switched by the control unit into the opaque state in an event the camera module 210 is disabled and the illumination system 220 is enabled to project at least one of the static image and the dynamic image.

At step 350, the Switchable foil 240 is electronically switched by the control unit 250 into the transparent state in an event the illumination system 220 is disabled and the camera module 210 is enabled to capture the field-of-view in a scenery at least around the Vehicle 100. The method 300 terminates at step 360.

Further, the present disclosure advantageously encompasses a camera system 200 for effectively switching between the camera module 210 and the illumination system 220. Further, the camera module 210 and the illumination system 220 are effectively switched based on the requirement by the control unit such that independent functionality is not disturbed or compromised. The present disclosure allows mounting of the camera module 210 and the illumination system 220 within a same housing without affecting individual functionality.

### REFERENCE SIGNS

- 100: Vehicle
- 110: Bumper
- 200: Camera system
- 210: Camera module
- 220: Illumination system
- 230: Housing unit
- 240: Switchable foil
- 260: Orifice

## Claims

1. A camera system (200) for a vehicle (100), comprising:
- a camera module (210) configured to capture a field-of-view of the camera module (210) in a scenery at least around the vehicle (100);
- an illumination system (220) configured to project at least one of a static image and a dynamic image;
- a housing unit (230) configured to accommodate the camera module (210) and the illumination system (220), wherein the housing unit (230) is configured with an orifice (260);
- a switchable foil (240) is configured to cover the orifice (260), wherein the switchable foil (240) is configured to be switched between an opaque state and a transparent state; and
- a control unit configured to:
electronically switch the switchable foil (240) into the opaque state in an event the camera module (210) is disabled and the illumination system (220) is enabled to project at least one of the static image and the dynamic image, and
electronically switch the switchable foil (240) into the transparent state in an event the illumination system (220) is disabled and the camera module (210) is enabled to capture the field-of-view in a scenery at least around the vehicle (100),
wherein the switchable foil (240) captures the light and displays the static image or the dynamic image on it, in an event the control unit (250) switches the switchable foil (240) to the opaque state.

2. The camera system (200) for the vehicle (100) as claimed in claim 1, wherein the camera module (210) is mounted within the housing unit (230) such that the camera module (210) is capable of capturing the field-of-view of the camera module (210) in a scenery at least around the vehicle (100) through the orifice of the housing unit (230).

3. The camera system (200) for the vehicle (100) as claimed in claim 1, wherein the illumination system (220) is mounted within the housing unit (230) such that the illumination system (220) is configured to project at least one of the static image and the dynamic image towards the orifice of the housing unit (230).

4. The camera system (200) for the vehicle (100) as claimed in claim 1, wherein the camera module (210) captures the field-of-view in a scenery at least around the vehicle (100) and the switchable foil (240) turns transparent in an event the illumination system (220) is disabled and the camera module (210) is enabled to capture the field-of-view in a scenery at least around the vehicle (100).

5. The camera system (200) for the vehicle (100) as claimed in claim 1, wherein the camera module (210) and the illumination system (220) are disposed within the housing unit (230) such that the line-of-sights of the camera module (210) and the illumination system (220) are not in interference with each other.

6. The camera system (200) for the vehicle (100) as claimed in claim 1, wherein the housing unit (230) is closed at all sides except from the orifice through which any light is allowed to enter or exit.

7. The camera system (200) for the vehicle (100) as claimed in claim 1, wherein the housing is made of one of plastic, metal and alloy.

8. The camera system (200) for the vehicle (100) as claimed in claim 1, wherein the control unit (250) further is configured to one of enable and disable one of the camera module (210) and the illumination system (220).

9. A method of operating a camera system (200) for a vehicle (100), comprising:
- capturing a field-of-view by a camera module (210) in a scenery at least around the vehicle (100);
- projecting at least one of a static image and a dynamic image by an illumination system (220), wherein
a housing unit (230) is configured to accommodate the camera module (210) and the illumination system (220), the housing unit (230) is configured with an orifice, and
a switchable foil (240) is configured to cover the orifice, the switchable foil (240) is configured to be switched between an opaque state and a transparent state;
- electronically switching the switchable foil (240), by a control unit (250), into the opaque state in an event the camera module (210) is disabled and the illumination system (220) is enabled to project at least one of the static image and the dynamic image; and
- electronically switching the switchable foil (240), by the control unit (250), into the transparent state in an event the illumination system (220) is disabled and the camera module (210) is enabled to capture the field-of-view in a scenery at least around the vehicle (100),
wherein the switchable foil (240) captures the light and displays the static image or the dynamic image on it, in an event the control unit (250) switches the switchable foil (240) to the opaque state.

## Patentansprüche

1. Kamerasystem (200) für ein Fahrzeug (100), das aufweist:
- ein Kameramodul (210), das dazu ausgebildet ist, ein Sichtfeld des Kameramoduls (210) in einer Gegend zumindest um das Fahrzeug (100) herum zu erfassen;
- ein Beleuchtungssystem (220), das dazu ausgebildet ist, von einem statischen Bild und einem dynamischen Bild zumindest eines zu projizieren;
- eine Gehäuseeinheit (230), die dazu ausgebildet ist, das Kameramodul (210) und das Beleuchtungssystem (220) aufzunehmen, wobei die Gehäuseeinheit (230) mit einer Öffnung (260) ausgebildet ist;
- eine schaltbare Folie (240), die dazu ausgebildet ist, die Öffnung (260) abzudecken, wobei die schaltbare Folie (240) dazu ausgebildet ist, zwischen einem undurchsichtigen Zustand und einem durchsichtigen Zustand umgeschaltet zu werden; und
- eine Steuereinheit, die dazu ausgebildet ist,
die schaltbare Folie (240) elektronisch in den undurchsichtigen Zustand zu schalten, wenn das Kameramodul (210) deaktiviert ist und das Beleuchtungssystem (220) aktiviert ist, um von dem statischen Bild und dem dynamischen Bild zumindest eines zu projizieren, und
die schaltbare Folie (240) elektronisch in den transparenten Zustand zu schalten, wenn das Beleuchtungssystem (220) deaktiviert ist und das Kameramodul (210) aktiviert ist, um das Sichtfeld in einer Gegend zumindest um das Fahrzeug (100) herum zu erfassen,
wobei die schaltbare Folie (240) das Licht erfasst und das statische Bild oder das dynamische Bild darauf anzeigt, wenn die Steuereinheit (250) die schaltbare Folie (240) in den undurchsichtigen Zustand schaltet.

2. Kamerasystem (200) für das Fahrzeug (100) nach Anspruch 1, wobei das Kameramodul (210) innerhalb der Gehäuseeinheit (230) so montiert ist, dass das Kameramodul (210) das Sichtfeld des Kameramoduls (210) in einer Gegend zumindest um das Fahrzeug (100) herum durch die Öffnung der Gehäuseeinheit (230) erfassen kann.

3. Kamerasystem (200) für das Fahrzeug (100) nach Anspruch 1, wobei das Beleuchtungssystem (220) innerhalb der Gehäuseeinheit (230) so montiert ist, dass das Beleuchtungssystem (220) dazu ausgebildet ist, von dem statischen Bild und dem dynamischen Bild zumindest eines in Richtung der Öffnung der Gehäuseeinheit (230) zu projizieren.

4. Kamerasystem (200) für das Fahrzeug (100) nach Anspruch 1, wobei das Kameramodul (210) das Sichtfeld in einer Gegend zumindest um das Fahrzeug (100) erfasst und die schaltbare Folie (240) durchsichtig ist, wenn das Beleuchtungssystem (220) deaktiviert ist und das Kameramodul (210) aktiviert ist, um das Sichtfeld in einer Gegend zumindest um das Fahrzeug (100) herum zu erfassen.

5. Kamerasystem (200) für das Fahrzeug (100) nach Anspruch 1, wobei das Kameramodul (210) und das Beleuchtungssystem (220) innerhalb der Gehäuseeinheit (230) so angeordnet sind, dass die Sichtlinien des Kameramoduls (210) und des Beleuchtungssystems (220) sich nicht gegenseitig stören.

6. Kamerasystem (200) für das Fahrzeug (100) nach Anspruch 1, wobei die Gehäuseeinheit (230) mit Ausnahme der Öffnung, durch die jegliches Licht eintreten oder austreten kann, an allen Seiten geschlossen ist.

7. Kamerasystem (200) für das Fahrzeug (100) nach Anspruch 1, wobei das Gehäuse aus einem von Kunststoff, Metall und einer Legierung hergestellt ist.

8. Kamerasystem (200) für das Fahrzeug (100) nach Anspruch 1, wobei die Steuereinheit (250) ferner zu einem von Folgendem ausgebildet ist:
von dem Kameramodul (210) und dem Beleuchtungssystem (220) eines zu aktivieren; und
von dem Kameramodul (210) und dem Beleuchtungssystem (220) eines zu deaktivieren.

9. Verfahren zum Betreiben eines Kamerasystems (200) für ein Fahrzeug (100), das aufweist:
- Erfassen eines Sichtfeldes durch ein Kameramodul (210) in einer Gegend zumindest um das Fahrzeug (100) herum;
- Projizieren zumindest eines von einem statischen Bild und einem dynamischen Bild durch ein Beleuchtungssystem (220), wobei
eine Gehäuseeinheit (230) dazu ausgebildet ist, das Kameramodul (210) und das Beleuchtungssystem (220) aufzunehmen, die Gehäuseeinheit (230) mit einer Öffnung ausgebildet ist, und
eine schaltbare Folie (240) dazu ausgebildet ist, die Öffnung abzudecken, wobei die schaltbare Folie (240) dazu ausgebildet ist, zwischen einem undurchsichtigen Zustand und einem durchsichtigen Zustand umgeschaltet zu werden;
- elektronisches Schalten der schaltbaren Folie (240) durch eine Steuereinheit (250) in den undurchsichtigen Zustand, wenn das Kameramodul (210) deaktiviert ist und das Beleuchtungssystem (220) aktiviert ist, um von dem statischen Bild und dem dynamischen Bild zumindest eines zu projizieren; und
- elektronisches Umschalten der schaltbaren Folie (240) durch die Steuereinheit (250) in den durchsichtigen Zustand, wenn das Beleuchtungssystem (220) deaktiviert ist und das Kameramodul (210) aktiviert ist, um das Sichtfeld in einer Gegend zumindest um das Fahrzeug (100) herum zu erfassen,
wobei die schaltbare Folie (240) das Licht erfasst und das statische Bild oder das dynamische Bild darauf anzeigt, wenn die Steuereinheit (250) die schaltbare Folie (240) in den undurchsichtigen Zustand schaltet.

## Revendications

1. Un système (200) de caméra pour un véhicule (100), comprenant :
- un module (210) de caméra configuré pour prendre un champ de vue du module (210) de caméra dans une scène au moins autour du véhicule (100) ;
- un système (220) d'éclairage configuré pour projeter au moins l'une d'une image statique et d'une image dynamique ;
- une unité (230) d'enveloppe configurée pour loger le module (210) de caméra et le système (220) d'éclairage, dans lequel l'unité (230) d'enveloppe est configurée en ayant un orifice (260) ;
- une feuille (240) commutable est configurée pour recouvrir l'orifice (260), dans lequel la feuille (240) commutable est configurée pour être commutée entre un état opaque et un état transparent ; et
- une unité de commande configurée pour :
commuter électroniquement la feuille (240) commutable dans l'état opaque dans le cas où le module (210) de caméra est hors service et le système (220) d'éclairage est en service pour projeter au moins l'une de l'image statique et de l'image dynamique ; et
commuter électroniquement la feuille (240) commutable dans l'état transparent dans le cas où le système (220) d'éclairage est hors service et le module (210) de caméra est en service pour prendre le champ de vue dans une scène au moins autour du véhicule (100),
dans lequel la feuille (240) commutable capte la lumière et affiche sur elle l'image statique ou l'image dynamique dans le cas où l'unité (250) de commande commute la feuille (240) commutable dans l'état opaque.

2. Le système (200) de caméra pour le véhicule (100) tel que revendiqué à la revendication 1,
dans lequel le module (210) de caméra est monté dans l'unité (230) d'enveloppe de manière à ce que le module (210) de caméra soit apte à prendre le champ de vue du module (210) de caméra dans une scène au moins autour du véhicule (100) en passant par l'orifice de l'unité (230) d'enveloppe.

3. Le système (200) de caméra pour le véhicule (100) tel que revendiqué à la revendication 1,
dans lequel le système (220) d'éclairage est monté dans l'unité (230) d'enveloppe de manière à ce que le système (220) d'éclairage soit configuré pour projeter au moins l'une de l'image statique et de l'image dynamique vers l'orifice de l'unité (230) d'enveloppe.

4. Le système (200) de caméra pour le véhicule (100) tel que revendiqué à la revendication 1,
dans lequel le module (210) de caméra prend le champ de vue dans une scène au moins autour du véhicule (100) et la feuille (240) commutable devient transparente dans le cas où le système (220) d'éclairage est hors service et le module (210) de caméra est en service pour prendre le champ de vue dans une scène au moins autour du véhicule (100).

5. Le système (200) de caméra pour le véhicule (100) tel que revendiqué à la revendication 1,
dans lequel le module (210) de caméra et le système (220) d'éclairage sont disposés dans l'unité (230) d'enveloppe de manière à ce que les lignes de vue du module (210) de caméra et du système (220) d'éclairage n'interfèrent pas les unes avec les autres.

6. Le système (200) de caméra pour le véhicule (100) tel que revendiqué à la revendication 1,
dans lequel l'unité (230) d'enveloppe est fermée de tous les côtés à l'exception de l'orifice par lequel de la lumière peut entrer ou sortir.

7. Le système (200) de caméra pour le véhicule (100) tel que revendiqué à la revendication 1,
dans lequel l'enveloppe est faite de l'un d'une matière plastique, d'un métal et d'un alliage.

8. Le système (200) de caméra pour le véhicule (100) tel que revendiqué à la revendication 1,
dans lequel l'unité (250) de commande est configurée en outre pour l'un de mettre en service et de mettre hors service l'un du module (210) de caméra et du système (220) d'éclairage.

9. Un procédé pour faire fonctionner un système (200) de caméra pour un véhicule (100) comprenant :
- prendre un champ de vue par un module (210) de caméra dans une scène au moins autour du véhicule (100) ;
- projeter au moins l'une d'une image statique et d'une image dynamique par un système (220) d'éclairage, dans lequel
une unité (230) d'enveloppe est configurée pour loger le module (210) de caméra et le système (220) d'éclairage, dans lequel l'unité (230) d'enveloppe est configurée en ayant un orifice, et
une feuille (240) commutable est configurée pour recouvrir l'orifice, dans lequel la feuille (240) commutable est configurée pour être commutée entre un état opaque et un état transparent ;
- commuter électroniquement la feuille (240), commutable par une unité (250) de commande, dans l'état opaque dans le cas où le module (210) de caméra est hors service et le système (220) d'éclairage est en service pour projeter au moins l'une de l'image statique et de l'image dynamique ; et
- commuter électroniquement la feuille (240), commutable par l'unité (250) de commande, dans l'état transparent dans le cas dans lequel le système (220) d'éclairage est hors service et le module (210) de caméra est en service pour prendre le champ de vue dans une scène au moins autour du véhicule (100),
dans lequel la feuille (240) commutable capte la lumière et affiche sur elle l'image statique ou l'image dynamique dans le cas où l'unité (250) de commande commute la feuille (240) commutable dans l'état opaque.
